# EUROPÄISCHE PATENTSCHRIFT

(11) **EP 0 498 294 B1**
(45) Veröffentlichungstag und Bekanntmachung des Hinweises auf die Patenterteilung: **05.10.1994**
(21) Anmeldenummer: 92101497.3
(22) Anmeldetag: 30.01.1992
(51) Int. Cl.: A01D 34/72, A01D 34/68

(54) **Mäher mit einem bodenwärts offenen Mähwerksgehäuse**
Mower with downward open mower housing
Tondeuse avec caisse de tondeuse à fond ouvert

(30) Priorität: 04.02.1991 US 651851
(43) Veröffentlichungstag der Anmeldung: 12.08.1992
(73) Patentinhaber: DEERE & COMPANY, Moline, Illinois 61265 (US)
(72) Erfinder: Kuhn, John Boyd, Rubicon, Wisconsin 53078 (US)
(74) Vertreter: Feldmann, Bernhard

(56) Entgegenhaltungen:
- DE-A- 1 482 005
- DE-A- 2 624 983
- DE-A- 3 542 276
- GB-A- 1 584 495
- US-A- 4 189 903
- US-A- 4 312 174
- US-A- 4 864 808

## Beschreibung

Die Erfindung bezieht sich auf einen Mäher mit einem bodenwärts offenen und eine im wesentlichen vertikal verlaufende Gehäusewand aufweisenden Mähwerksgehäuse, in dem wenigstens ein um eine lotrechte Achse umlaufendes Mähmesser angeordnet ist, in das eine Einrichtung zum Mulchen einsetzbar ist und in dessen Gehäusewand eine Auswurföffnung vorgesehen ist.

Bei diesem Mäher (US-A-4 189 903) kann in das Mähwerksgehäuse eine Mulcheinrichtung eingesetzt werden, die zum Mulchen eine Vielzahl von Rippen aufweist. Hierdurch sollen die geschnittenen Partikel in die Mitte des Mähwerksgehäuses gelenkt werden, wo sie unkontrolliert nach unten zu einem nochmaligen Zerkleinern durch ein umlaufendes Mähmesser fallen. Das Mähmesser ist so gestaltet, daß es beim Umlauf einen Aufwind erzeugt. Die eingesetzte Mulcheinrichtung verschließt eine im Mähwerksgehäuse vorgesehene Auswurföffnung vollständig, so daß beim Mulchen von insbesondere langem Gras die Luftzirkulation gestört wird und in der Mitte des Mähergehäuses Gutansammlungen auftreten, die dazu führen, daß das geschnittene Gut in Klumpen zu Boden fällt, ohne daß es nochmals zerkleinert werden könnte.

Aus dem Dokument US-A-4 312 174 ist es bereits bekannt, einen zum Mulchen umrüstbaren Rasenmäher mit einem Gehäuse zu versehen, das eine äußere umlaufende Wand und eine innere umlaufende Wand aufweist, wobei die innere Wand unmittelbar oberhalb eines umlaufenden Schneidmessers endet und zwischen den beiden Wänden ein ringförmiger Schneidraum gebildet ist, in dem das Gut mehrmals geschnitten werden kann. Eine durch eine Platte verschließbare seitliche Auswurföffnung und eine ebenfalls durch eine Platte verschließbare obere Auswurföffnung sind ebenfalls vorgesehen. Soll dieser Rasenmäher zum Mulchen eingesetzt werden, so wird ein herkömmliches Schneidmesser durch ein zum Mulchen geeignetes ersetzt.

Es ist ebenfalls nicht mehr neu (DE-A-3 542 276), ein Rasenmähergehäuse mit einer bogenförmigen und einen nach unten zeigenden Flansch aufweisenden Zwischenabdeckung zu versehen, die mit dem Gehäuse verschweißt ist. Hierdurch soll das Gehäuse verstärkt und der Luftraum der schräg nach oben und hinten ansteigenden Oberwand des Gehäuses nach oben begrenzt werden. Eine Einrichtung zum Mulchen ist nicht vorgesehen.

Die mit der Erfindung zu lösende Aufgabe wird darin gesehen, den Mulchvorgang auch unter schwierigen Einsatzbedingungen zu verbessern. Diese Aufgabe ist dadurch gelöst worden, daß die Auswurföffnung über ein Prallblech teilweise verschließbar ist und, daß die Einrichtung zum Mulchen ein bogenförmig ausgebildetes Mulchblech aufweist, das sich von der Oberseite des Mähwerksgehäuses nach unten in Richtung auf das Mähmesser erstreckt und eine Oberseite aufweist, an deren sich der Gehäusewand zugelegenen Kante eine vertikal oder etwa vertikal verlaufende und bodenwärts weisende Gleitwand anschließt, wobei das Mähmesser einen Mulchabschnitt aufweist, auf den das stromabwärts liegende Ende des Mulchbleches gerichtet ist. Auf diese Weise staut sich der Luftstrom nicht vollständig in dem Mähwerksgehäuse, sondern kann teilweise gegebenenfalls zusammen mit einem geringen Anteil des geschnittenen Gutes durch die Auswurföffnung austreten. Verstopfungen oder ein Herunterfallen des geschnittenen Gutes in Klumpen werden vermieden. Die besondere Anordnung und Ausbildung der Mulcheinrichtung führt das geschnittene Gut in einer gezielten und kontrollierten Bahn zum Mulchen zu dem Mähmesser zurück.

Im Einzelnen kann nach der Erfindung ferner vorgesehen werden, daß das Mulchblech mit Bezug auf den Umlaufkreis des Mähmessers derart bogenförmig ausgebildet ist, daß es sich in Umlaufrichtung des Mähmessers gesehen radial nach innen erstreckt.

Damit sich die Auswurföffnung kontrolliert einstellen läßt, kann das Prallblech sich von der Oberseite der Auswurföffnung nach unten erstrecken.

Zweckmäßig sollte das Mulchblech mit Bezug auf die Flugrichtung des gemähten Gutes nach einem weiteren Vorschlag der Erfindung vor der Auswurföffnung angeordnet sein.

Ferner wird erfindungsgemäß noch vorgeschlagen, daß die bodenwärts weisende Gleitwand im Umlaufrichtung des Mähmessers gesehen in ihrer Höhe ständig abnimmt. Hierdurch verläuft die Bodenseite der Gleitwand im wesentlichen gerade und ein Teil der umlaufenden Luft gegebenenfalls vermischt mit geschnittenen Partikeln kann unter der Gleitwand austreten, was insbesondere bei langem geschnittenen Gut von Vorteil ist, um eine Klumpenbildung zu vermeiden.

Dadurch, daß ein Luftaustrittsöffnungen aufweisendes Lochblech mit dem Prallblech in verschiedenen Vertikalstellungen verbindbar ist, wird ferner erreicht, daß sich die Größe der Auswurföffnung leicht einstellen läßt. Beim Mulchen von Gras setzen sich die im Lochblech vorgesehenen Löcher schnell zu, und das Lochblech wirkt wie eine geschlossene Platte. Beim Mulchen von trockenen Blättern dagegen, helfen die im Lochblech vorgesehenen Löcher, durch diese etwa hindurchgezwängte Blätter weiter zu zerbröckeln. Von Vorteil ist des weiteren, wenn der Mulchabschnitt des Mähmessers zur Messeraussenkante Abstand aufweist, dessen nachlaufender Teil tiefer liegt als dessen vorlaufender Teil, der als Schneidkante ausgebildet ist. Der tiefer liegende Teil des Mähmessers erzeugt beim Umlauf einen Abwind, der das gemulchte Gut auf den Boden zwingt.

Schließlich kann noch das Mulchblech und das Prallblech mit dem Mähwerksgehäuse lösbar verbunden sein.

In der Zeichnung ist ein nachfolgend näher erläutertes Ausführungsbeispiel der Erfindung dargestellt. Es zeigt:
- Fig. 1: ein Mähwerksgehäuse mit einer Einrichtung zum Mulchen in der Draufsicht,
- Fig. 2: das Mähwerksgehäuse in der Seitenansicht und in teilweise auseinander gezogener Darstellung,
- Fig. 3: ein Prallblech in Blickrichtung der Pfeile 3 : 3 in Fig. 2,
- Fig. 4: ein Mähmesser mit Mulchabschnitt in perspektivischer Darstellung,
- Fig. 5: die Einrichtung zum Mulchen in der Draufsicht,
- Fig. 6: die Einrichtung zum Mulchen in der Ansicht von rückwärts und
- Fig. 7: die Seitenansicht zu Fig. 5 in perspektivischer Darstellung.

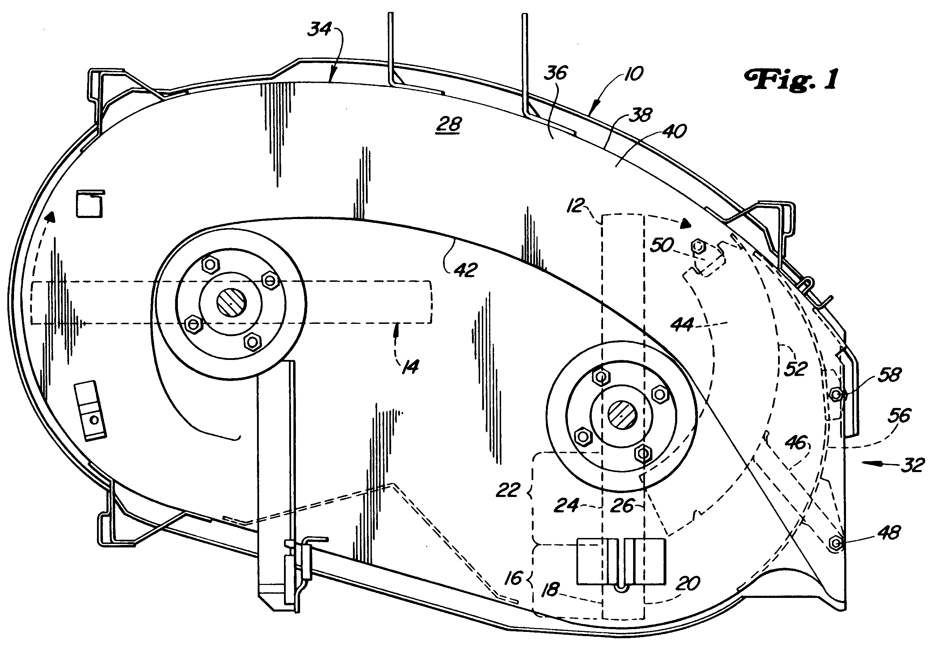

In Fig. 1 der Zeichnung ist ein Mähwerksgehäuse eines Rasenmähers mit 10 bezeichnet. Ein solches Mähwerksgehäuse kann frontseitig, aber auch heckseitig an einem Kleinschlepper angeschlossen werden. Ein Anschluß zwischen der Vorder- und Hinterachse ist ebenfalls möglich. Allerdings kann die Erfindung auch an anderen Mähern Verwendung finden, beispielsweise an solchen, die von Hand an Holmen geführt werden.

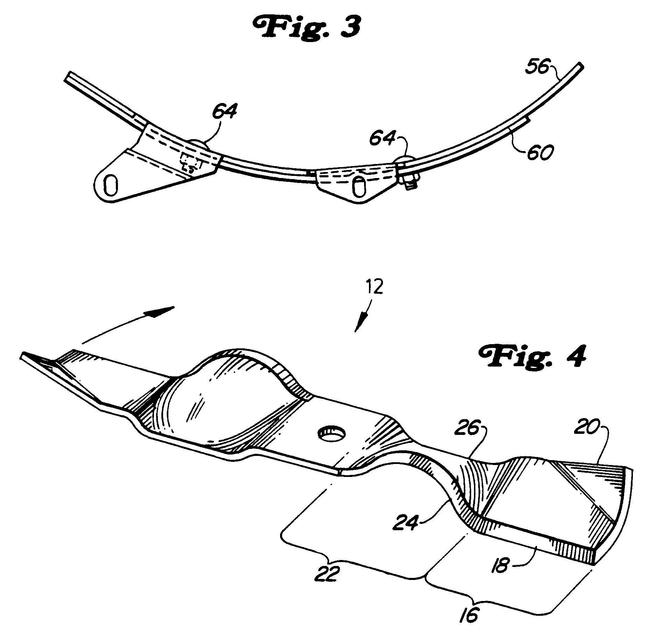

Über einen in der Zeichnung der Einfachheit halber nicht dargestellten Verbrennungsmotor oder über eine andere Kraftquelle am Kleinschlepper werden zwei Mähmesser 12 und 14 in einer horizontalen Ebene und im Uhrzeigerdrehsinn angetrieben. Eins dieser Mähmesser ist in Fig. 4 dargestellt. Aus dieser Fig. ist zu ersehen, daß die Mähmesser 12, 14 an jeder Seite einen herkömmlichen Endteil 16 mit einer vorlaufenden Schneidkante 18 und einen nachlaufenden und nach oben abgewinkelten Flügelteil 20 aufweisen, der einen Aufwind erzeugt. Das Mähmesser 12 ist außerdem mit einem inneren Teil 22 oder Mulchteil versehen, der sich an den Endteil 16 anschließt und einen nachlaufenden und nach unten gerichteten Flügelteil 26 aufweist, der beim Umlauf einen Abwind erzeugt. Das Mähwerksgehäuse 10 hat ferner eine im wesentlichen sich horizontal erstreckende Oberseite 28 und eine vertikale Gehäusewand 30, die von der Oberseite nach unten ragt und die Mähmesser umgibt. Eine seitliche Auswurföffnung 32 ist noch in dem Mähwerksgehäuse 10 vorgesehen. Durch diese kann Luft zusammen mit dem gemähten Gut bei einem normalen Einsatz nach außen austreten. Ein in den Frontteil 36 des Mähwerksgehäuses 10 eingepasster Schacht 34 soll im Einsatz den Luftstrom und das gemähte Gut kanalisieren, so daß das gemähte Gut im Mähwerksgehäuse von links nach rechts fliegt und schließlich durch die Austrittsöffnung 32 austritt. Der Schacht 34 wird dabei im einzelnen aus der vorne liegenden Gehäusewand 30 in dem Bereich 38, einem vorderen Teil 40 der Oberseite 28 und aus einer mit der Oberseite entsprechend verbundenen vertikalen Schachtwand 42 gebildet. Der in soweit beschriebene Mäher ist im wesentlichen bis auf die besondere Art der Mähmesser herkömmlicher Art. Werden die Mähmesser durch Messer, die keinen Mulchteil aufweisen ersetzt, was in einfacher Weise durchgeführt werden kann, so ist auch die Arbeitsweise in herkömmlicher Art möglich, d. h. beim Umlauf der Messer wird ein Aufwind erzeugt, der das zu schneidende Gut, beispielsweise Gras, aufrichtet, damit es durch die um vertikale Achsen umlaufenden Messer besser geschnitten werden kann. Das gemähte Gut wird auf den Boden oder in einen Fangbehälter geblasen.

Derartige Mäher lassen sich zum Mulchen umrüsten, d. h. zu einem Verfahren, bei dem das Gut mehrmals im Mähwerksgehäuse herumgeführt und damit mehrmals geschnitten wird, so daß schließlich relativ kleine Partikel innerhalb des Mähwerksgehäuses nach unten zu Boden fallen, die dann dort verrotten. Dies hat neben der Nährstoffversorgung des Bodens den Vorteil, daß das gemähte Gut nicht mehr gesammelt und - noch wichtiger - nicht mehr entsorgt werden muß. Das in Fig. 4 dargestellte Mähmesser 12 eignet sich besonders gut zum Mulchen. Die Einrichtung zum Mulchen beinhaltet ferner ein Mulchblech 44, das in dem Mähwerksgehäuse 10 sich von oben nach unten geneigt verlaufend angeordnet ist. Im einzelnen ist das Mulchblech 44 entsprechend der Drehrichtung eines Mähmessers gebogen ausgebildet und an seinem stromaufwärtsliegenden Ende an die Oberseite 28 angeschlossen, so daß der Luftstrom und die Partikel nach unten in Richtung auf das Mähmesser 12 abgelenkt werden. Ein Armteil 46 erstreckt sich von dem rampenförmig ausgebildeten Mulchblech nach außen und dient zur Befestigung des Mulchbleches 44 mit dem Mähwerksgehäuse 10 über eine Schraubverbindung 48. Über einen Halter 50, der mit dem Mähwerksgehäuse verschraubt ist, wird die Oberseite des Mulchbleches 44 gegen die Unterseite der Oberseite 28 des Mähwerksgehäuses gehalten.

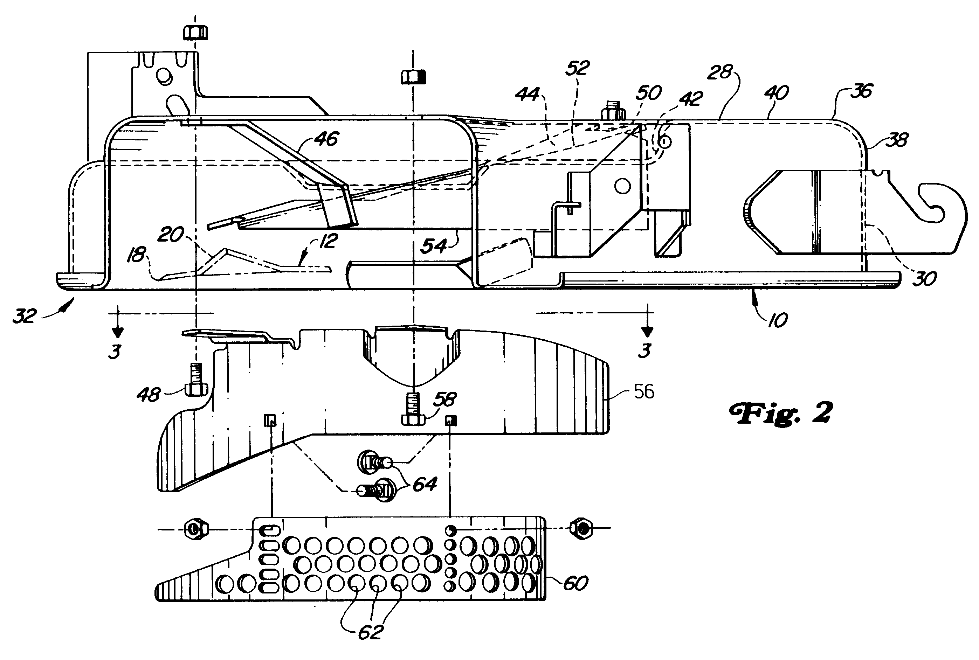

An die außen liegende Kante 52 der Oberseite des Mulchbleches 44 schließt sich eine nach unten gerichtete Gleitwand 54 an, über die der Hauptluftstrom und damit auch die Partikel radial nach innen in Richtung auf die Drehachse des Mähmessers 12 gelenkt werden. Das Mulchblech befindet sich mit Bezug auf den Gutfluß vor der Auswurföffnung 32 und seine Gleitwand 54 führt etwa 90% der Partikel wieder zurück zu dem Mähmesser 12 und hält sie damit von der Auswurföffnung fern. Die Unterseite der Oberseite des Mulchbleches 44 unterstützt das Zurückführen weiter. Wie aus der Fig. 2 unschwer zu erkennen ist, endet das Mulchblech kurz oberhalb des Mähmessers 12 und richtet die zurückgeführten Partikel auf den Mulchabschnitt 24, so daß die Partikel einem weiteren Zerkleinerungsvorgang durch den Mulchabschnitt unterworfen werden. Der nachlaufende und nach unten gerichtete Flügelteil 26 erzeugt, wie bereits geschildert wurde, einen Abwind, durch den die Partikel nach unten in Richtung Boden geblasen werden.

Der Mulchvorgang wird weiter dadurch verbessert, daß die Auswurföffnung 32 teilweise verschlossen werden kann. Hierzu ist ein Prallblech 56 vorgesehen, das über die Schraubverbindung 48 und eine weitere Schraubverbindung 58 mit dem Mähwerksgehäuse 10 verbunden werden kann. Das Prallblech 56 deckt zumindest den oberen Bereich der Auswurföffnung im eingebauten Zustand ab und ein Lochblech 60 mit einer Vielzahl von Luftaustrittsöffnungen 62 kann noch über Schraubverbindungen 64 höhenverstellbar mit dem Prallblech 56 verbunden werden. Hierdurch kann die Auswurföffnung 32 je nach den vorherrschenden Bedingungen mehr oder weniger verschlossen werden. Für die Umrüstung eines herkömmlichen Mähers werden zunächst die nomalerweise zum Mähen benutzten und keinen Mulchabschnitt aufweisenden Mähmesser durch die in Fig. 4 dargestellten Messer ersetzt. Danach wird der Halter 50 an das Mähwerksgehäuse 10 angeschraubt und das Mulchblech 44 mit seiner Oberseite in den Halter eingeschoben. Das Mähwerksgehäuse 10 braucht hierzu nicht notwendigerweise von dem Fahrzeug abgebaut zu werden, da das Mulchblech durch die Auswurföffnung in den Halter von einer Bedienungsperson eingesetzt werden kann. Nachfolgend wird das Prallblech 55 eingesetzt und zusammen mit dem Mulchblech 44 bzw. dessen Armteil 46 über die Schraubverbindung 48 mit dem Mähwerksgehäuse 10 verbunden. Anschließend muß noch die Schraubverbindung 58 eingesetzt werden.

Beim Einsatz eines derartig umgerüsteten Mähers rotieren die beiden Mähmesser in einer horizontalen Ebene im Uhrzeigerdrehsinn, wie es in Fig. 1 durch die Pfeile angedeutet ist. Die vorlaufenden Schneidkanten 18 der Mähmesser 12 und 14 schneiden bei einer Vorwärtsbewegung des Mähers das Gut ab, und die nach oben gerichteten Flügelteile 20 erzeugen einen nach oben gerichteten Luftstrom, der die abgeschnittenen Partikel mitnimmt. Die von dem linken Mähmesser abgeschnittenen Partikel fliegen nach rechts in den Schacht 34, der in das Mähwerksgehäuse 10 eingeformt ist. Innerhalb des Schachtes fliegen die Partikel nach rechts und treffen auf die Mulcheinrichtung 44 auf, die die Luft und die Partikel nach unten und in Richtung auf das rechte Mähmesser zurückführt. Bei ihrem Flug in dem Schacht nach rechts treffen die Partikel auch auf die vertikal gerichtete Gleitwand 54, wodurch die Partikel radial nach innen in Richtung auf den Mulchteil des rechten Mähmessers gelenkt werden. Die Gleitwand führt auch den Luftstrom von der Auswurföffnung fort und leitet ihn stattdessen auf den entsprechenden Mulchteil des rechten Mähmessers. Das Mulchblech und die Gleitwand bilden einen Kanal, der kurz vor dem Mulchteil des rechten Mähmessers endet. Sobald die Partikel die Mulcheinrichtung verlassen, werden sie von den umlaufenden Mulchteilen des rechten Mähmessers erfaßt und erneut zerkleinert. Durch den nachlaufenden und einen Abwind erzeugenden Flügelteil 26 werden die dann mehrmals zerkleinerten Partikel innerhalb des Mähwerksgehäuses 10 nach unten auf den Boden gedrückt.

Beim Mähen in Gebieten mit relativ kurzem Gras haben die abgeschnittenen Partikel infolge der nach oben gerichteten Flügelteile die Tendenz, sich nahe der Oberseite 28 des Mähwerksgehäuses 10 zu bewegen. Wenn sie in die Mulcheinrichtung eintreten, bleibt diese Tendenz erhalten. Bei diesem Vorgang sind die Partikel mit dem Luftstrom durchsetzt, wobei die Luft auch unterhalb der Partikel strömt. Dadurch werden, wenn die Luft und die Partikel durch die Mulcheinrichtung nach unten gedrückt wird, die meisten Partikel durch die Gleitwand 54 radial nach innen und unten gerichtet. Allerdings kann ein Teil des sich unterhalb der Partikel befindlichen Luftstroms unter der Gleitwand nach rechts entweichen und damit durch die Auswurföffnung 32 austreten. Hierdurch wird die Luftzirkulation innerhalb des Mähwerksgehäuses 10 erheblich verbessert. Der Vakuumeffekt zum Hochsaugen der Partikel wird erhöht. Im ganzen gesehen wird die Mähqualität dadurch gesteigert. Je nachdem wie lang das zu schneidende Gut ist, wird die Auswurföffnung mehr oder weniger geöffnet.

Die teilweise zu öffnende oder zu verschließende Auswurföffnung verbessert auch die Qualität des Grasschnittes in dichtstehender Vegetation. Beim Mulchen in solchen Bedingungen oder auch bei langem Gras, befindet sich im Mähwerksgehäuse ein größerer Anteil von fliegenden Partikeln. Jedoch werden infolge der vorgesehenen Maßnahmen keine Verstopfungen auftreten oder Grasklumpen zu Boden fallen. Bei dem bevorzugten Ausführungsbeispiel erlaubt die teilweise offene Auswurföffnung, daß die Luft innerhalb des Mähwerksgehäuses 10 kontinuierlich fließt, wodurch ein gleichmäßiger Luftstrom zum Fördern der Partikel entsteht. Andererseits ist bei einem größeren Anteil von sich in dem Mähwerksgehäuse befindlichen Partikel die Fähigkeit des Mähmessers zum Mulchen reduziert. Deshalb ermöglicht das bevorzugte Ausführungsbeispiel eine Überlauffunktion dadurch, daß ein Teil der Partikel nach rechts unterhalb der Gleitwand austreten kann. Dem Mähmesser werden deshalb nicht zu viele Partikel wieder zugeführt, was zu einer Störung führen könnte. Der zurückgeführte Teil der Partikel allerdings wird wieder einem Mulchvorgang unterworfen. Der unterhalb der Gleitwand austretende Anteil der Partikel fliegt durch die Auswurföffnung auf die Oberfläche des Rasens. Dieser Anteil ist aber gering und kann toleriert werden. Damit wird auch bei dicht stehender Vegetation der größte Teil des geschnittenen Gutes einem Mulchvorgang unterworfen und innerhalb des Mähwerksgehäuses auf dem schon geschnittenen Boden abgelegt.

Beim Einsatz des Mähers zum Schneiden von insbesondere feuchtem Gras haben die in dem Lochblech 60 vorgesehenen Luftaustrittsöffnungen 62 die Tendenz, sich zuzusetzen. Das Lochblech hat dann dieselbe Wirkung, wie ein Blech ohne Luftaustrittsöffnungen, und die Luft kann nur unterhalb des Lochbleches austreten. Beim Einsatz des Mähers als Laubsauger hat das Lochblech allerdings eine besondere Aufgabe. Es zerbröckelt insbesondere trockene Blätter, wenn diese durch die Luftaustrittsöffnungen gezwungen werden. Daher kann dann die Bedienungsperson das einstellbare Lochblech in eine tiefere Stellung setzen, wenn Blätter gemulcht werden sollen. Entsprechendes gilt für das Mulchen von kurzem Gras. Befindet sich das Lochblech dagegen in einer höheren Position, so wird der Luftaustritt durch die Auswurföffnung vergrößert. Ebenfalls wird das Hochsaugen der Partikel und deren Zirkulation dann verbessert. Dementsprechend kann die Bedienungsperson das Lochblech in einer relativ hohen Stellung festsetzen, wenn eine größere Zirkulation und eine verbesserte Saugkraft zum Schneiden und Mulchen von relativ langem und schwerem oder feuchtem Gras erwünscht ist.

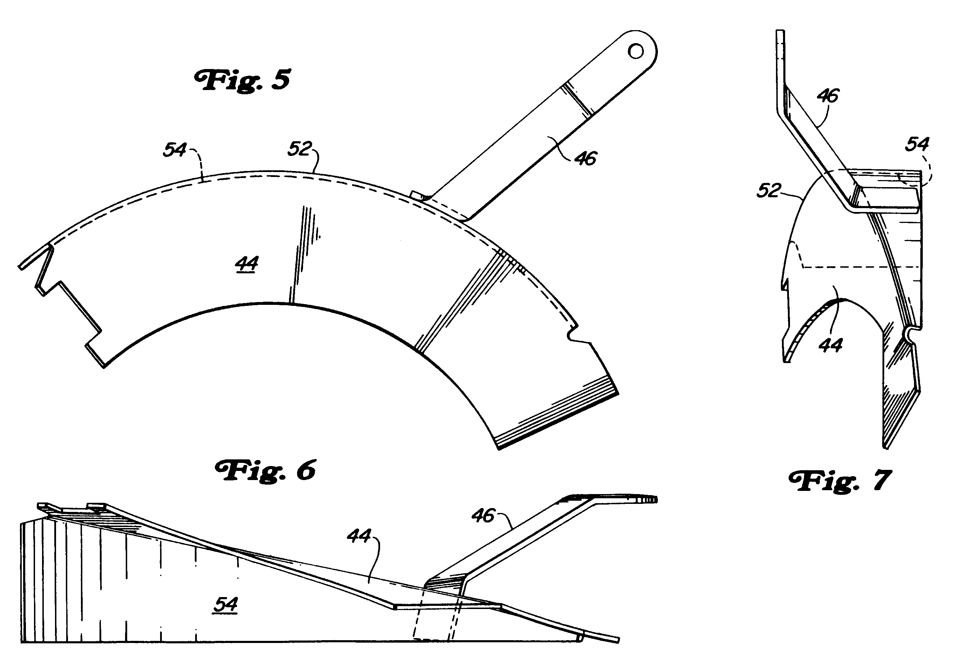

Die in den Fig. 2, 5, 6 und 7 dargestellte Mulcheinrichtung 44 hat eine geneigte Oberfläche, die den Luftstrom und die mitgeführten Partikel aufnimmt und sie gegen die Gleitwand leitet. Gleichermaßen kann die Mulcheinrichtung auch mit einer Oberfläche versehen sein, die nach innen geneigt verlaufend angeordnet ist, um die Gleitwand darin zu unterstützen, daß die Luft und die Partikel in Richtung auf die Drehachse des Mähmessers gerichtet werden.

Beim bevorzugten Ausführungsbeispiel sind zwei Mähmesser dargestellt. Die vorliegende Erfindung läßt sich aber auch bei einem Mäher mit nur einem Mähmesser oder bei Mähern mit einer Vielzahl von Messern und einem anders gestalteten Mähwerksgehäuse erfolgreich einsetzen. Auch muß die Mulcheinrichtung nicht unbedingt vor der Auswurföffnung vorgesehen werden, obwohl dies unbestritten die vorteilhafteste Stellung ist. Andere Anordnungen sind ebenfalls möglich.

## Patentansprüche

1. Mäher mit einem bodenwärts offenen und eine im wesentlichen vertikal verlaufende Gehäusewand (38) aufweisenden Mähwerksgehäuse (10), in dem wenigstens ein um eine lotrechte Achse umlaufendes Mähmesser (12, 14) angeordnet ist, in das eine Einrichtung (44) zum Mulchen einsetzbar ist und in dessen Gehäusewand (38) eine Auswurföffnung (32) vorgesehen ist, dadurch gekennzeichnet, daß die Auswurföffnung (32) über ein Prallblech (56) teilweise verschließbar ist und daß die Einrichtung zum Mulchen ein bogenförmig ausgebildetes Mulchblech (44) aufweist, das sich von der Oberseite (28) des Mähwerksgehäuses (10) nach unten in Richtung auf das Mähmesser (12) erstreckt und eine Oberseite aufweist, an deren sich der Gehäusewand (38) zugelegenen Kante (52) eine vertikal oder etwa vertikal verlaufende und bodenwärts weisende Gleitwand (54) anschließt, wobei das Mähmesser (12) einen Mulchabschnitt (24) aufweist, auf den das stromabwärts liegende Ende des Mulchbleches (44) gerichtet ist.

2. Mäher nach Anspruch 1, dadurch gekennzeichnet, daß das Mulchblech (44) mit Bezug auf den Umlaufkreis des Mähmessers (12) derart bogenförmig ausgebildet ist, daß es sich in Umlaufrichtung des Mähmessers gesehen radial nach innen erstreckt.

3. Mäher nach Anspruch 1 oder 2, dadurch gekennzeichnet, daß das Prallblech (56) sich von der Oberseite der Auswurföffnung (32) nach unten erstreckt.

4. Mäher nach einem oder mehreren der vorherigen Ansprüche dadurch gekennzeichnet, daß das Mulchblech (44) mit Bezug auf die Flugrichtung des gemähten Gutes vor der Auswurföffnung (32) angeordnet ist.

5. Mäher nach einem oder mehreren der vorherigen Ansprüche, dadurch gekennzeichnet, daß die bodenwärts weisende Gleitwand (54) im Umlaufrichtung des Mähmessers (12) gesehen in ihrer Höhe ständig abnimmt.

6. Mäher nach einem oder mehreren der vorherigen Ansprüche, dadurch gekennzeichnet, daß ein Luftaustrittsöffnungen (62) aufweisendes Lochblech (60) mit dem Prallblech (56) in verschiedenen Vertikalstellungen verbindbar ist.

7. Mäher nach einem oder mehreren der vorherigen Ansprüche, dadurch gekennzeichnet, daß der Mulchabschnitt (24) des Mähmessers (12) zur Messeraußenkante Abstand aufweist, und der nachlaufende Teil des Mulchabschnitts (24) tiefer liegt als dessen vorlaufender Teil, der als Schneidkante ausgebildet ist.

8. Mäher nach einem oder mehreren der vorherigen Ansprüche, dadurch gekennzeichnet, daß das Mulchblech (44) und das Prallblech (56) mit dem Mähwerksgehäuse (10) lösbar verbunden sind.

## Claims

1. A mower with a mower mechanism housing (10) open to the ground and having a substantially vertically extending housing wall (38), in which there is arranged at least one mower blade (12, 14) rotating about a perpendicular axis, in which a mulching device (44) can be fitted and in whose housing wall (38) there is a discharge opening (32), characterized in that the discharge opening (32) can be partially closed by a baffle plate (56) and in that the mulching device comprises an arcuate mulch plate (44) which extends from the upper side (28) of the mower mechanism housing (10), downwardly in the direction of the mower blade (12) and has an upper side, on the edge (52) of which facing the housing wall (38) there adjoins a vertically or approximately vertically extending slide wall (54) facing the ground, wherein the mower blade (12) has a mulch section (24), to which the downstream end of the mulch plate (44) is directed.

2. A mower according to claim 1, characterized in that the mulch plate (44) is formed arcuately relative to the circle of rotation of the mower blade (12) in such a way that it extends radially inwardly in the direction of rotation of the mower blade.

3. A mower according to claim 1 or 2, characterized in that the baffle plate (56) extends downwardly from the upper side of the discharge opening (32).

4. A mower according to one or more of the preceding claims, characterized in that the mulch plate (44) is arranged in front of the discharge opening (32) in relation to the direction of the trajectory of the mowed material.

5. A mower according to one or more of the preceding claims, characterized in that the slide wall (54) pointing to the ground reduces progressively in height in the direction of rotation of the mower blade (12).

6. A mower according to one or more of the preceding claims, characterized in that an apertured plate (60) having air outlet openings (62) can be connected to the baffle plate (56) at different vertical positions.

7. A mower according to one or more of the preceding claims, characterized in that the mulch section (24) of the mower blade (12) is spaced from the outer edge of the blade and the trailing part of the mulch section (24) lies lower than its leading part, which is formed as a cutting edge.

8. A mower according to one or more of the preceding claims, characterized in that the mulch plate (44) and the baffle plate (56) are releasably attached to the mower mechanism housing (10).

## Revendications

1. Tondeuse, avec un carter (10) de dispositif de fauchage à fond ouvert et présentant une paroi de carter (38) s'étendant sensiblement verticalement, carter dans lequel est disposée au moins une lame de fauchage (12, 14) tournant autour d'un axe vertical, un dispositif de battage (44) pouvant être installé dans le carter (10) et une ouverture d'éjection (32) étant prévue dans sa paroi de carter (38), **caractérisée** en ce que l'ouverture d'éjection (32) peut être partiellement fermée par une tôle déflectrice (56), et en ce que le dispositif de battage présente une tôle de battage en arc (44), qui s'étend vers le bas en direction de la lame de fauchage (12) à partir du côté supérieur (28) du carter (10) de dispositif de fauchage et qui présente un côté supérieur au bord (52), tourné vers la paroi de carter (38), duquel se raccorde une paroi de glissement (54) s'étendant verticalement ou approximativement verticalement et dirigée vers le sol, la lame de fauchage (12) présentant une partie de battage (24) vers laquelle est dirigée l'extrémité de la tôle de battage (44) située en aval.

2. Tondeuse selon la revendication 1, **caractérisée** en ce que la tôle de battage (44) est configurée, par rapport au cercle de circulation de la lame de fauchage (12), en une forme d'arc telle qu'elle s'étend radialement vers l'intérieur, vu dans la direction de circulation de la lame de fauchage.

3. Tondeuse selon la revendication 1 ou 2, **caractérisée** en ce que la tôle déflectrice (56) s'étend vers le bas à partir du côté supérieur de l'ouverture d'éjection (32).

4. Tondeuse selon l'une quelconque des revendications précédentes, **caractérisée** en ce que la tôle de battage (44) est disposée avant l'ouverture d'éjection (32), par rapport à la direction d'écoulement du produit fauché.

5. Tondeuse selon l'une quelconque des revendications précédentes, **caractérisée** en ce que la paroi de glissement (54) dirigée vers le sol a une hauteur qui diminue constamment, vu dans la direction de circulation de la lame de fauchage (12).

6. Tondeuse selon l'une quelconque des revendications précédentes, **caractérisée** en ce qu'une tôle perforée (60) présentant des ouvertures de sortie d'air (62) peut être assemblée à la tôle déflectrice (56) dans différentes positions verticales.

7. Tondeuse selon l'une quelconque des revendications précédentes, **caractérisée** en ce que la partie de battage (24) de la lame de fauchage (12) est distante du bord extérieur de la lame, et la région postérieure de la partie de battage (24) se trouve plus bas que sa région antérieure, qui est configurée en tranchant.

8. Tondeuse selon l'une quelconque des revendications précédentes, **caractérisée** en ce que la tôle de battage (44) et la tôle déflectrice (56) sont assemblées de façon détachable au carter (10) de dispositif de fauchage.
